# EUROPEAN PATENT APPLICATION

(11) **EP 3 572 970 A1**
(43) Date of publication of application: **27.11.2019**
(21) Application number: 18173579.6
(22) Date of filing: 22.05.2018
(51) Int. Cl.: G06K 9/00

(54) **A SAFETY SYSTEM AND METHOD FOR AUTONOMOUS DRIVING AND/OR DRIVER ASSISTANCE IN A MOTOR VEHICLE**

(71) Applicant: Veoneer Sweden AB, 447 83 Vårgårda (SE)
(72) Inventor: CRONVALL, Per, 583 31 Linköping (SE); PERSSON, Gustav, 590 72 Ljungsbro (SE); FORSLUND, David, 583 30 Linköping (SE); BÄCK, Viktor, 169 64 Solna (SE); PETERSSON, Daniel, 586 65 Linköping (SE); ELBORNSSON, Jonas, 59 135 Motala (SE)
(74) Representative: Müller Verweyen

(57) **Abstract**

A safety system (10) for a motor vehicle comprises at least one sensor device (12) adapted to capture sensor data from the surrounding of the motor vehicle and a data processing device (14) adapted to process data from said sensor device (12). The data processing device (14) comprises an object detector (15) adapted to detect object candidates corresponding to potential objects in the vehicle surrounding, an object tracker (16) adapted to track object candidates detected by said object detector (15) over several time frames, a decision section (17) adapted to control a safety actuator (18) depending on the result of said object detection and tracking processing by said object detector and tracker (15, 16) and a track validator (33). The track validator (33) comprises a track classifier (39) adapted to classify tracks from said object tracker (16), and supply said decision section (17) with class labels and/or confidences and/or probability estimates for use in said controlling of said safety actuator (18).

## Description

The invention relates to a safety system for a motor vehicle, comprising at least one sensor device adapted to capture sensor data from the surrounding of the motor vehicle, a data processing device adapted to process data from said sensor device, wherein said data processing device comprises an object detector adapted to detect object candidates corresponding to potential objects in the vehicle surrounding, an object tracker adapted to track object candidates detected by said object detector over several time frames, and a decision logic adapted to control a safety actuator device depending on the result of said object detection and tracking processing by said data processing device. The invention also relates to a corresponding safety method.

A safety system of the above kind is known for example from EP 2 219 133 B1.

In an automotive active safety system it is important to act in dangerous situations, but equally important not to make unnecessary interventions. In an object detection system, false interventions are typically caused by false detections, due to e.g. misclassifications. By tracking detections over time, the number of false detections can be reduced. A traditional object tracker using a parametric model can achieve such reduction by, e.g., detecting inconsistent motion. However, occasionally false tracks will appear that are consistent with the object tracker model and are thereby inherently hard to remove. The number of false tracks can, to some extent, be reduced by using more sophisticated object tracker models but at the cost of increased complexity and tuning effort.

The problem underlying the present invention is an automotive safety system where the number of false detections can be reduced within a restrictive computational budget.

The invention solves this problem with the features of the independent claims. By using a track validator comprising a track classifier it is possible to classify tracks from the object tracker, for example into at least true tracks and false tracks, and more generally to generate class labels and/or confidences of the tracks, and/or probability estimates of being true tracks. According to the invention, decisions based on wrong or false tracks, i.e. artefacts which do not correspond to a true object in the vehicle environment, can be avoided by considering the output of the track classifier, for example confidence or estimated probability of a track to be true, in the decision section controlling the safety actuator.

Preferably, the track validator uses track data from the object tracker and/or detection data from said object detector in the track validation, in order to achieve an optimal track validation result.

Preferably, the track classifier uses one or more features from the following group in the track classification: track age; detection confidence; detection cluster characteristics; object position, size and velocity; object tracker state covariances; and/or ego-vehicle motion parameters.

In a preferred embodiment, the safety system is a camera-based driver assistance system detecting for example pedestrians and vehicles. The object detector is image based and generates object detections for each image frame. The object detections are fed to the object tracker, which is preferably based on an extended Kalman filter. Several object detections per frame may be associated with a track, thus forming a detection cluster.

Object detection characteristics, as provided by the object detector, and object tracker states, as provided by the object tracker, are preferably used as features for the track validator classifier. Features that are used by the track validator are preferably one or more of: track age; detection confidence statistics, e.g. statistical moments; detection cluster characteristics, like minimum, maximum or statistical moments of confidences or number of detections in clusters; object positions, sizes and/or velocities as measured over the entire track; object tracker state covariances; and/or ego-vehicle motion parameters. The track classifier in the track validator preferably consists of boosted regression trees.

In alternative embodiments, other sensors may be used in the safety system, e.g., radar sensors or lidar sensors, with suitable detections schemes. The object tracker may use different filtering techniques, e.g., other Kalman filter variations, particle filters or probabilistic hypothesis density filter. Arbitrary features and track classifier types may be used.

In addition to the above-described online part of the invention, a method of building a track classifier to be used in an online safety system is also provided according to the invention. In this offline part, a plurality of prerecorded true tracks and a plurality of prerecorded false tracks are input into a feature extractor to extract feature data from the prerecorded tracks, and the extracted feature data are input into a training section adapted for track classifier training by machine learning.

Optionally, a feature selector for feature selection can be provided, which uses the extracted features from said feature extractor and outputs a reduced set of feature data to the training section. The feature selector preferably uses classifier performance data fed back from the training section to the feature selector.

The prerecorded tracks used in the offline training are preferably generated by sensor data input to an object detector, inputting objects detected by the object detector to an object tracker, and matching annotations to tracks generated by the object tracker, thus marking the tracks as true tracks or false tracks. In this case, the feature extractor preferably uses detection data from the offline object detector of detected objects corresponding to the prerecorded tracks used in the track classifier training.

Alternatively, features and/or track classifier may be generated by using machine learning techniques such as recurrent neural networks and convolutional neural networks (CNNs). Other possibilities include support vector machines and gaussian processes. Features could include image-based features, e.g. Haar-based features, HOG features, LBP, color names, optical flow, depth estimates or CNN-based features.

In the following the invention shall be illustrated on the basis of preferred embodiments with reference to the accompanying drawings, wherein:

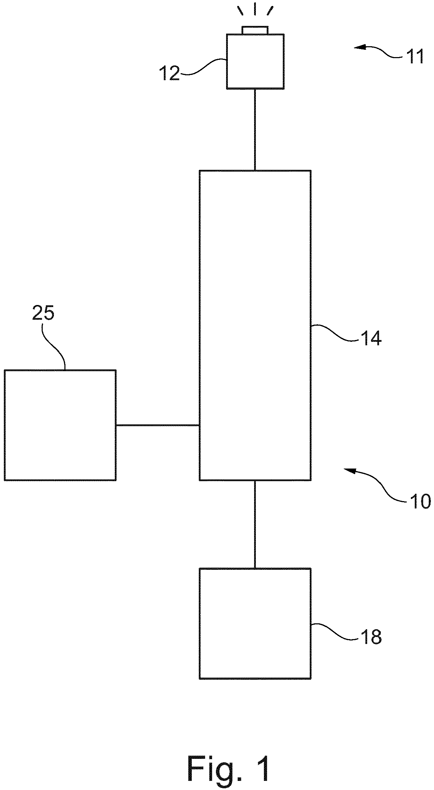

- Fig. 1: shows a schematic view of an automotive safety system;
- Fig. 2: shows a flow diagram relating to an online part of an automotive safety system; and
- Fig. 3: Shows a flow diagram relating to an offline part of an automotive safety system.

The safety system 10 is mounted in a motor vehicle and comprises an imaging apparatus 11 for capturing images of a region surrounding the motor vehicle, for example a region in front of the motor vehicle. Preferably the imaging apparatus 11 comprises one or more optical imaging devices or sensors 12, in particular one or more cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality of imaging devices 12 in particular forming a stereo imaging apparatus 11. In other embodiments only one imaging device 12 forming a mono imaging apparatus 11 can be used. Other imaging sensors 12 than cameras may be used, for example a radar sensor or a lidar sensor, with suitable detection schemes.

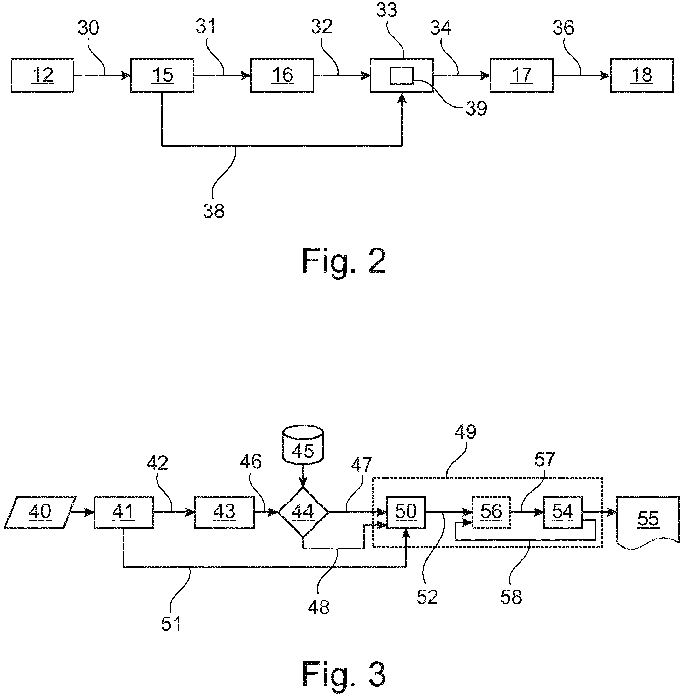

The imaging apparatus 11 is coupled to an on-board data processing device 14 adapted to process the image data received from the imaging apparatus 11. The data processing device 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing device 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM and/or microprocessor functionality. The data processing device 14 and the data memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18, as explained below with reference to Figure 2, are performed automatically and continuously during driving in real time.

Image and data processing carried out in the processing device 14 advantageously comprises identifying and preferably also classifying, by an object detector 15, possible objects (object candidates) in front of the motor vehicle, such as pedestrians, other vehicles, bicyclists and/or large animals, tracking over time the position of objects or object candidates identified in the captured images in an object tracker 16, and activating or controlling at least one safety device 18 depending on an estimation performed with respect to a tracked object, for example on an estimated collision probability, by a decision section 17.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the motor vehicle comprising the processing device is an autonomous vehicle adapted to drive partly or fully autonomously or automatically, and driving actions of the driver are partially and/or completely replaced or executed by the motor vehicle. Preferably, the safety system 10 is an active safety system 10 where one or more active safety devices 18 is controlled by the data processing device 14 based on the decision of the decision section 17.

In the following, the online part of the invention taking place in the on-board processing device 14 is explained in more detail with reference to Figure 2.

The sensor data 30 from the sensor 12 is forwarded to the on-board processing device 14 where further image and data processing is carried out in the processing device 14 by corresponding software. In particular, the processing device 14 comprises an object detector 15 adapted to detect and preferably also to classify possible objects in the surrounding of the motor vehicle, such as pedestrians, other vehicles, bicyclists, motorcycles and/or large animals.

The detections or object candidates 31 detected by the object detector 15 are forwarded to an object tracker 16 adapted to track over time the object candidates and estimate their states, e.g. positions and velocities. The tracks of detected objects tracked over a plurality of image frames are output by the object tracker 16 along with internal tracker information as track data 32.

According to the invention, track validator 33 is provided. The track validator 33 receives as input the track data 32 from the object tracker 16, but also object detection data 38 from the object detector 15. The object detection data 38 comprises or consists of object candidate data 31 provided from the object detector 15 to the object tracker 16. The track validator 33 maintains a history of detection data 38 and track data 32 and extracts features therefrom for use by the track validator classifier 39, which is thereby capable of discriminating between true tracks and false tracks among all track candidates output by the object tracker 16 and add information, for example in the form of a class label and/or a confidence and/or an estimate of the probability of a track being true, to track data 32 to form track validator output 34. True tracks are tracks belonging to one and the same physical object of the class of interest in the environment of the motor vehicle, tracked over a plurality of image frames. False tracks are tracks which are not true tracks.

Track validator output 34 is forwarded to the decision section 17 for making a safety decision 36 and controlling a safety device 18 based on this decision. The estimation and decision section 17, also called decision logic, is adapted to make a decision depending on the estimated collision probability of a detected and tracked true object with the ego vehicle, and to activate or control at least one safety device 18 depending on said decision.

In the following, the offline part of the invention taking place at a developer's site in the development of the software for the on-board processing device 14 is explained in more detail with reference to Figure 3.

In the offline part shown in Figure 3, sensor data 40, originating for example from a vehicle mounted sensor 12, is input to an object detector 41. The object detector can be identical to the object detector 15 used in the motor vehicle, or a different object detector. The object detections or object candidates 42 are input to an object tracker 43, which may be identical to, or different from, the online object tracker 16 used in the motor vehicle. The object tracker 43 tracks object identified by the object detector 43 over several time frames, and outputs corresponding tracks 46 to an annotating section 44.

The tracks 46 identified by the object tracker 43 are matched, marked or tagged, with annotations identifying them as true tracks 47 or false tracks 48 in step 44. The annotations 45 can be generated manually, semi-automatically or automatically. In the manual case, for example, an operator visually inspects the tracks 46 on a display, and tags or marks the displayed tracks 46 as true tracks 47 or false tracks 48 according to his/her experience. In other words, for the offline training detected tracks 46 are matched with annotations 45 to separate true tracks 47 and false tracks 48.

As a result of the procedure described so far with respect to Figure 3, a plurality of true tracks 47 and a plurality of false tracks 48 are provided. There may be other ways of generating a plurality of true tracks 47 and a plurality of false tracks 48. Also, a plurality of true tracks 47 and a plurality of false tracks 48 may be taken from a database.

The offline procedure 49 of training the track classifier, to be implemented into the motor vehicle in the track validator 33, is described in the following. First, the plurality of true tracks 47 and the plurality of false tracks 48 are input to a feature extractor 50. The feature extractor 50 extracts feature data, i.e., data relating to specific features of the tracks, from the track data 47, 48 and also from detection data 51 of the corresponding detections, associated with the track data 47, 48, as obtained from the object detector 41.

The extracted feature data 52 output by the feature extractor 50 is used in a training section 54 for training the track classifier by using machine learning techniques. As a result of the track classifier training 54, optimized track validator parameters 55 are generated, which form the basis of the trained track validator classifier 39 in the online safety system shown in Figure 2.

Optionally, a subset consisting of the most discriminative features can be selected in a feature selection step 56 to reduce computational cost and improving robustness. The feature selection 56, if present, is arranged between the feature extractor 50, receiving the feature data 52 as input, and the training section 54 to which it outputs reduced feature data 57. The feature selection 56 is based on analyzing the performance of the track classifier. In order to enable the feature selection 56 to do this, classifier performance data 58 is fed back from the training section 54 to the feature selector 56.

The feature selection 56 and classifier training 54 may be iterated for further refinement.

As described above, an efficient track validator 33 can be created using a non-parametric data-driven method. A track validation model can be constructed offline (Figure 3) in the training procedure 49 by application of machine learning techniques on recorded data 47, 48 containing a substantial number of examples of both true tracks 47 and false tracks 48. The track validation model is then applied online (Figure 2) in the track validator 33 to discriminate between true tracks and false tracks.

## Claims

1. A safety system (10) for a motor vehicle, comprising at least one sensor device (12) adapted to capture sensor data from the surrounding of the motor vehicle, a data processing device (14) adapted to process data from said sensor device (12), wherein said data processing device (14) comprises an object detector (15) adapted to detect object candidates corresponding to potential objects in the vehicle surrounding, an object tracker (16) adapted to track object candidates detected by said object detector (15) over several time frames, and a decision section (17) adapted to control a safety actuator (18) depending on the result of said object detection and tracking processing by said object detector and tracker (15, 16), **characterized in that** said data processing device (14) comprises a track validator (33), wherein the track validator (33) comprises a track classifier (39) adapted to classify tracks from said object tracker (16), and supply said decision section (17) with class labels and/or confidences and/or probability estimates for use in said controlling of said safety actuator (18).

2. The safety system as claimed in claim 1, **characterized in that** said track classifier (39 uses in said track validation features based on track data (32) from said object tracker (16), for example one or more features from the group of:
- track age;
- object position;
- object size;
- object velocity.

3. The safety system as claimed in any one of the preceding claims, **characterized in that** said track classifier (39 uses in said track classification features based on internal tracker data, for example object tracker state covariances.

4. The safety system as claimed in any one of the preceding claims, **characterized in that** said track classifier (39 uses in said track classification features based on detection data (38) from said object detector (15), for example one or more features from the group of:
- detection positions;
- detection sizes;
- detection confidences;
- detection cluster characteristics, like minimum, maximum or statistical moments of confidences or number of detections in clusters.

5. The safety system as claimed in any one of the preceding claims, **characterized in that** said track classifier (39) uses in said track classification features based on auxiliary information, for example one or more features from the group of:
- sensor calibration parameters;
- ego-vehicle motion parameters.

6. The safety system as claimed in any one of the preceding claims, **characterized in that** said track classifier (39) uses one or more image-based features, for example one or more from the group of:
- Haar-based features;
- HOG features;
- LBP, color names, optical flow, depth estimates and/or CNN-based features.

7. The safety system as claimed in any one of the preceding claims, **characterized in that** said object tracker (16) is based on an extended Kalman filter, another Kalman filter variation, a particle filter and/or a probabilistic hypothesis density filter.

8. The safety system as claimed in any one of the preceding claims, **characterized in that** at least one sensor device (12) is a camera.

9. A method of building a track classifier (39) to be used in a safety system (10) as claimed in any one of the preceding claims, **characterized in that** said method comprises inputting a plurality of prerecorded true tracks (47) and a plurality of prerecorded false tracks (48) into a feature extractor (50) adapted to extract feature data (52) from said prerecorded tracks (47, 48), and inputting said feature data (52) into a training section (54) adapted for track classifier training by machine learning.

10. The method as claimed in claim 9, **characterized in that** a feature selector (56) for feature selection uses the extracted features (52) from said feature extractor (50) and outputs a reduced set of feature data (57) to said training section (54).

11. The method as claimed in claim 10, **characterized in that** said feature selection (56) uses classifier performance data (58) fed back from said training section (54) to said feature selector (56).

12. The method as claimed in claim 10 or 11, **characterized in that** said feature selection (56) and said classifier training (54) are iterated several times for further refinement of the training process (49).

13. The method as claimed in any one of claims 9 to 12, **characterized in that** said prerecorded tracks (47, 48) are generated by sensor data (40) input to an object detector (41), inputting objects (42) detected by said object detector (41) to an object tracker (43), and matching annotations (44, 45) to tracks detected by said object tracker (43), marking said tracks as true tracks (47) or false tracks (48).

14. The method as claimed in claims 9 and 13, **characterized in that** said feature extractor (50) uses detection data (51) from said object detector (41) of detected objects corresponding to said prerecorded tracks (47, 48).

15. The method as claimed in any one of claims 9 to 14, **characterized in that** the track classifier (39) and/or features used by the track classifier (39) is generated by using machine learning techniques such as recurrent neural networks, convolutional neural networks, support vector machines, boosted regression trees and/or gaussian processes.
